# EUROPEAN PATENT APPLICATION

(11) **EP 2 317 139 A2**
(43) Date of publication of application: **04.05.2011**
(21) Application number: 10188886.5
(22) Date of filing: 26.10.2010
(51) Int. Cl.: F03D 11/04

(54) **Transportable wind turbine tower**

(30) Priority: 30.10.2009 US 609510
(71) Applicant: General Electric Company, Schenectady, NY 12345 (US)
(72) Inventor: Bagepalli, Bharat S., Schenectady, NY 12345 (US); Zhao, Richard L., Houston, TX 77027 (US); Karaca, Hueseyin, 48499, Salzbergen (DE); Paura, Ingo, 48499, Salzbergen (DE); Dean, Nathaniel S., Schenectady, NY 12345 (US)
(74) Representative: Bedford, Grant Richard

(57) **Abstract**

A tower (102) having a plurality of axial sections is provided. The tower includes at least one lower axial section (400, 600) having a non-circular cross-section in at least a portion thereof. The lower axial section (400, 600) is located near a bottom of the tower (102). At least one upper axial section (133) has a substantially circular cross-section in at least a portion thereof, and is located near a top of the tower (102). The tower has a cross-sectional profile that transitions from the non-circular cross-section to the substantially circular cross-section, and an outer diameter of the tower is less than a designated maximum diameter.

## Description

The invention relates generally to wind turbine tower construction and more specifically to a wind turbine tower and its method of construction that permits rail transport of sections for large towers.

For many years it has been common practice to build steel wind tower sections separately in a workshop facility and then to move each complete section to the site, where the wind turbine tower installation was performed. The tower sections would typically have a cylindrical or slightly tapered shape, and each of the sections could in turn be divided along axial lines into an adequate number of shells.

Due to the ever-increasing demand for taller and larger capacity towers and consequently larger dimensions of all parts needed to build such towers, a physical limit has been imposed by the infrastructure, e.g. the clearance on a bridge or in a tunnel or underpass.

For a given wind turbine, the wind load increases as square of the wind speed. As the tower height is increased, the wind shear increases non-linearly due to wind shear (ground effect on wind speed). Consequently, the higher the turbine towers are, the stronger should the structure be dimensioned, which in turn means that either the wall thickness should be increased or the diameter extended. Increased thickness would mean higher material costs and a requirement for heavier transportation vehicles, whether trucks, trains, ships, or helicopters, while diameters need to be appropriately dimensioned in order to pass over bridges and through tunnels and underpasses. Also, thicker steel stock is more difficult and more costly to form and fabricate.

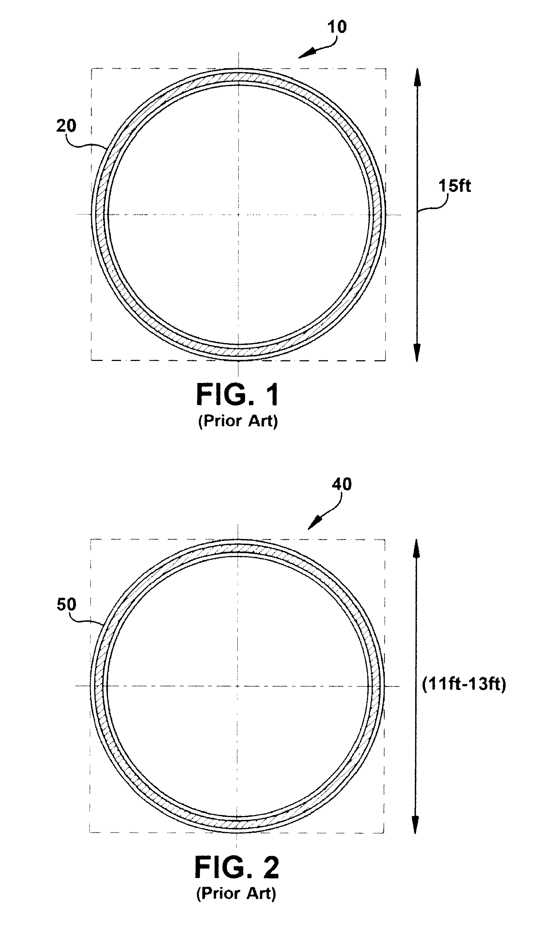

FIGS. 1 and 2, respectively, illustrate one example of maximum space envelopes available for truck and rail transport within the United States. This envelope includes the largest diameter of a tower being shipped, including any protruding flanges. Rail transport is the least expensive mode of transport for large tower sections. An exemplary 80-meter tower typically comprises three tower sections of varying diameter and thickness. The present known truckable base and mid-tower sections have about a 15 ft. (~ 4.6 meters) maximum diameter. The present known top section has about an 11 ft. (~ 3.4 m) maximum diameter. The space envelope 10 for transport by truck is about 11 to 15 ft. (~ 3.4 to 4.6 m), thus allowing a tubular section 20 of approximately that diameter to fit within the space envelope. The space envelope 40 for transport by rail (refer to FIG. 2) is up to about 11 ft. (~ 3.4 m) to about 13 ft. (~ 4 m) on a side, thus allowing a tubular section 50 of up to that approximate diameter to fit within the space envelope. On some rail routes the maximum width is about 13 feet 6 inches (~ 4.1 m). The present top section is thus transportable by rail. However, the present base and mid-tower sections exceed the rail envelope. The base and mid-tower sections must be transported by truck and generally are sized within the truck-shipping envelope of about 14+ ft (>= 4.3 m). Truck and rail transport outside the United States also are constrained by similar considerations of space envelope but with sizes specific to the locale.

Various aspects of the present invention relate to an apparatus and method for allowing sections of large wind turbine towers to be transported to a windfarm site by rail transport by construction of the tower sections to fall within an allowable space envelope for rail transport.

Briefly in accordance with one aspect of the present invention, a tower is provided having a plurality of axial sections. The tower includes at least one lower axial section having a non-circular cross-section in at least a portion thereof. The lower axial section is located near a bottom of the tower. At least one upper axial section has a substantially circular cross-section in at least a portion thereof, and is located near a top of the tower. The tower has a cross-sectional profile that transitions from the non-circular cross-section to the substantially circular cross-section, and an outer diameter of the tower is less than a designated maximum diameter.

In accordance with another aspect of the present invention, a wind turbine tower is provided having at least one lower section having a non-circular cross-section, and at least one upper section having a substantially circular cross-section. The cross-sectional profile of the tower transitions from the non-circular cross-section in the lower section to the substantially circular cross-section in the upper section.

In accordance with yet another aspect of the present invention, a wind turbine is provided having at least one lower tower section having a non-circular cross-section in at least a portion thereof. At least one upper tower section has a substantially circular cross-section in at least a portion thereof. The cross-sectional profile of the wind turbine tower transitions from the non-circular cross-section in the lower tower section to the substantially circular cross-section in the upper tower section.

Various features, aspects, and advantages of the present invention will become better understood when the following detailed description is read with reference to the accompanying drawings in which like characters represent like parts throughout the drawings, wherein:
FIG. 1 illustrates a maximum available space envelope for truck transport within the United States;
FIG. 2 illustrates a maximum available space envelope for rail transport within the United States;
FIG. 3 illustrates a wind turbine according to one aspect of the present invention;
FIG. 4 illustrates a perspective view of a lower tower section, according to an aspect of the present invention;
FIG. 5 illustrates a cross-sectional view of a maximum available space envelope for shipping and a cross-sectional view of the lower tower section of FIG. 4;
FIG. 6 illustrates a perspective view of a lower tower section, according to another aspect of the present invention; and
FIG. 7 illustrates a cross-sectional view of a maximum available space envelope for shipping and a cross-sectional view of the lower tower section of FIG. 6.

Various of the following embodiments of the present invention have many advantages, including permitting wind turbine tower sections that have previously required large diameters for structural integrity to incorporate reduced diameters that fall within allowable space envelopes for rail transport.

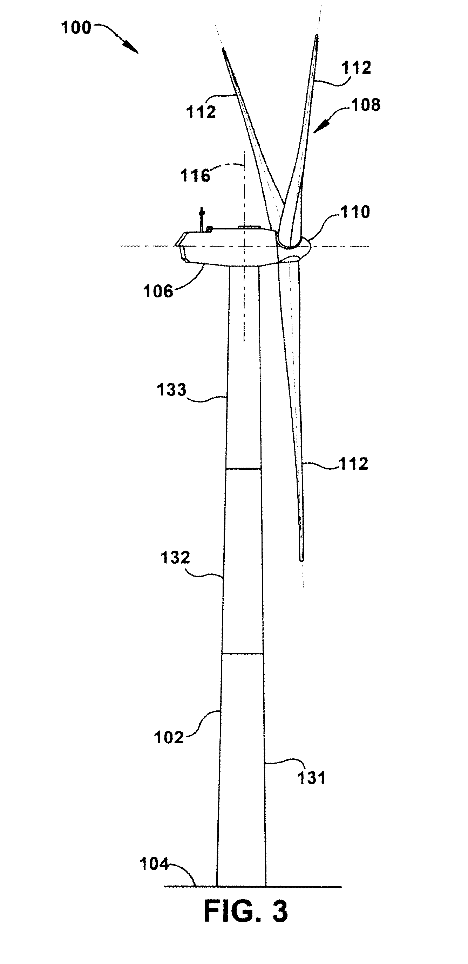

FIG. 3 is a schematic illustration of an exemplary wind turbine 100. In the exemplary embodiment, wind turbine 100 is a horizontal axis wind turbine. Alternatively, wind turbine 100 may be a vertical axis wind turbine. Wind turbine 100 has a tower 102 extending from a supporting surface 104, a nacelle 106 mounted on tower 102, and a rotor 108 coupled to nacelle 106. Rotor 108 has a rotatable hub 110 and a plurality of rotor blades 112 coupled to hub 110. In the exemplary embodiment, rotor 108 has three rotor blades 112. In an alternative embodiment, rotor 108 may have more or less than three rotor blades 112. In the exemplary embodiment, tower 102 is fabricated from tubular steel and has a cavity (not shown in FIG. 3) extending between supporting surface 104 and nacelle 106. Typically, tower 102 is comprised of three sections, bottom section 131, middle section 132 and top section 133. For an 80 to 100 meter tower, each section 131, 132, 133 may have a length of about 20 to about 35 meters. A lower section of the tower may include section 131 and/or section 132. An upper section of the tower may include section 133 and/or section 132. In other embodiments, the tower 102 may comprise more or less than three sections. In an alternate embodiment, tower 102 may be a lattice tower or a combination of lattice and tubular tower construction, or a tower formed at least partially of concrete.

A material shell, of which the tower consists, is responsible for carrying the loads induced by the wind or other necessary application. A shell of this kind most cost efficiently resists these bending loads by having the maximum possible diameter about a neutral axis 116. By not using the maximum outer diameter, a cost inefficiency is manifested by having to increase tower shell thickness not only in the bottom tower shell, but potentially in all tower sections where the maximum potential outer diameter is not utilized. Each additional increase in thickness at a fixed outer diameter is less efficient than the previous due to ever decreasing average shell diameter and load bearing capability. Increasing tower shell diameter will allow for relative shell thicknesses to decrease roughly to a square power.

Accordingly, it may be advantageous to increase tower diameter rather than the thickness of the steel plate or other wall material. For a given wind load, the wall thickness needed to resist this load varies inversely as the square of the diameter. A ten percent reduction in diameter would require a wall thickness that is twenty one percent larger, to have a tower that structurally resists the same load as before. In principle, this means that, any tower design that has portions of it situated far outboard from the tower center would result in less wall thickness. Since the available railable or truckable window is somewhat rectangular, we can utilize the vacant corner spaces between a circular cross-section and a square one to maximize effectiveness of the structure.

The lowermost cross-section of the base of the tower sees the highest loads and stresses due to the wind loads. It is this section that needs the most tower material (wall thickness at a chosen diameter). The loads at higher sections will gradually diminish, thus requiring thinner walls. Hence a tower whose cross-section at the lower parts of the base is nearly square (e.g., rectangular with rounded corners, octagonal, etc.) could be lighter, and have the thinnest possible walls. Sections approaching the middle and upper parts of a tower can blend into the circular cross-section at the very top, near the yaw bearing (not shown). This transition to circular can occur anywhere in the tower, since at some intervening heights, the diameter of the tower would be easily railable, and the tower weight manageable.

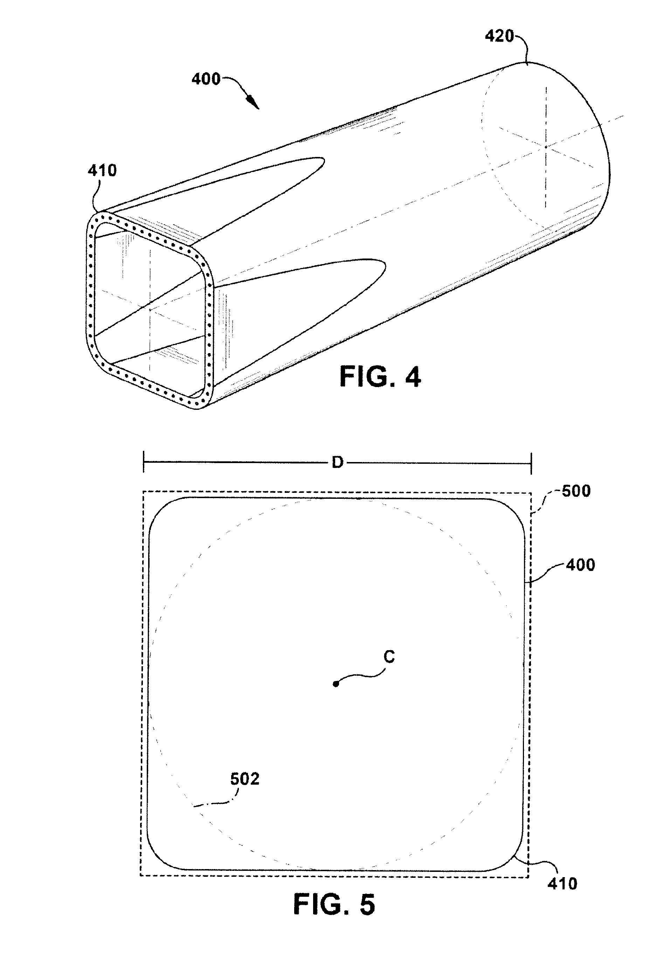

FIG. 4 illustrates an improved railable tower section according to an aspect of the present invention. The tower section 400, in this example, is a lower or bottom tower section. The base 410 of this section has a cross-sectional profile that is rectangular with rounded corners. The top 420 of this section has a circular cross-sectional profile. The cross-sectional profile of this tower section 400 transitions from a rectangular with rounded corners shape at the bottom, to a circular shape at the top.

An advantage of this design is in the improved strength to weight ratio and more optimal dimensions (from a transportation standpoint) of the tower. By using a polygonal base section having a non-circular cross-section, the outer circumference of the tower can be expanded to take advantage of the available shipping window. FIG. 5 illustrates a maximum available space envelope 500 for ground transportation. The distance D, in this example, is four meters. The space envelope 500 is assumed to be square and may be an example of the maximum sized cargo envelope for rail transportation. The tower section 400 has a bottom portion 410 with a polygonal cross-section. A conventional tower 502 has a circular cross-section and does not take advantage of as much of the available space envelope 500. The overall outer circumference of the tower 400 is more radially outward from a central point C than the circular tower 502. This enables the tower 400 to be fabricated from thinner material while having improved strength relative to tower 502. The conventional tower 502 requires thicker walls to maintain the same load rating. Accordingly, another advantage is that the tower 400 is lighter in weight than tower 502. By changing the shape of the bottom of the tower, the tower 400 can be made lighter and stronger compared to conventional tower 502.

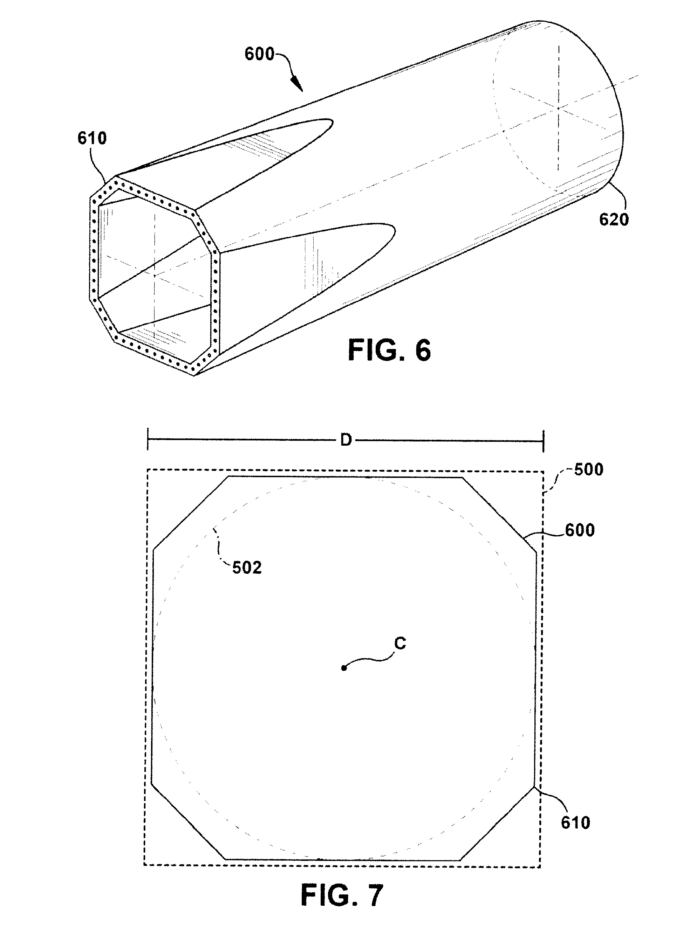

FIG. 6 illustrates another embodiment of an improved railable tower section according to an aspect of the present invention. The tower section 600, in this example, is a lower or bottom tower section. The base 610 of this section has a cross-sectional profile that is octagonal. The top 620 of this section has a circular cross-sectional profile. The cross-sectional profile of this tower section 600 transitions from an octagonal shape at the bottom, to a circular shape at the top.

FIG. 7 illustrates a maximum available space envelope 500 for ground transportation. The distance D, in this example, is four meters. The space envelope 500 is assumed to be square and may be an example of the maximum sized cargo envelope for rail transportation. The tower section 600 has a bottom portion 410 with an octagonal cross-section. A conventional tower 502 has a circular cross-section and does not take advantage of as much of the available space envelope 500. The overall outer circumference of the tower 600 is more radially outward from a central point than the circular tower 502. This enables the tower 600 to be fabricated from thinner material while having improved strength relative to tower 502. The conventional tower 502 requires thicker walls to maintain the same load rating. Accordingly, another advantage is that the tower 600 is lighter in weight than tower 502. By changing the shape of the bottom of the tower, the tower 600 can be made lighter and stronger compared to conventional tower 502.

In embodiments of the present invention, the transition from a non-circular cross-section to a substantially circular cross-section may occur in one tower section, multiple tower sections or within part of one tower section. In addition, the transition may occur between tower sections by using an adapter that is configured to join one tower section with a non-circular cross-section to another tower section having a substantially circular cross-section. An adapter could also be used in a single tower section as well.

The non-circular cross-section in any, or a portion, of the tower sections can have any suitable shape as desired by the specific application. By non limiting example, the non-circular cross-section could have a shape that is polygonal, polygonal with rounded corners, triangular, rectangular, rectangular with rounded corners, pentagonal, pentagonal with rounded corners, hexagonal, hexagonal with rounded corners, heptagonal, heptagonal with rounded corners, octagonal, octagonal with rounded corners, nonagonal, nonagonal with rounded corners, decagonal, decagonal with rounded corners, hendecagonal, hendecagonal with rounded corners, dodecagon, or dodecagon with rounded corners.

Typically, rail carriers permit items of a maximum weight, width, height and length. The tower, according to aspects of the present invention, can be sized to fit within these limitations. The weight of each tower section can be designed to be under about 140.000 lbs (~ 64,000 kg), or under any weight limit imposed by typical rail carriers or trucking companies. The width and height of each tower section can be designed to be under about 13 feet 6 inches (~ 4.1 meters), or under any height and/or width limit imposed by typical rail carriers. The length of each tower section can be designed to be under about 89 feet (~ 27 meters), or under any length limit imposed by typical rail carriers. Rail transport outside the U.S. is also constrained by similar considerations of weight, width, height and length, but with sizes specific to the locale. Accordingly, an improved tower has been provided that can be shipped by rail, enabling less costly transportation for large towers. A single train can transport many wind turbine towers, whereas at least three trucks were required to transport a single tower.

The present invention was described in conjunction with a tower for a wind turbine; however, it is to be understood that the tower, according to aspects of the present invention, may be useful for any application needing elevated towers. For example, the present invention could be applied to electrical utility power transmission wire towers, communication towers, on or off-shore wind turbine towers, lighthouses, fire monitoring towers, agricultural silos, residential or commercial applications, and any other application requiring a tower.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A tower having a plurality of axial sections, said tower comprising:
   at least one lower axial section having a non-circular cross-section in at least a portion thereof, said at least one lower axial section located near a bottom of said tower;
   at least one upper axial section having a substantially circular cross-section in at least a portion thereof, said at least one upper axial section located near a top of said tower;
   wherein the tower has a cross-sectional profile that transitions from said non-circular cross-section to said substantially circular cross-section, and an outer diameter of said tower less than a designated maximum diameter.
2. The tower according to Clause 1, the designated maximum diameter being a maximum diameter permitted for rail transport, and wherein the designated maximum diameter is equal to or less than about 4 meters.
3. The tower according to any preceding Clause, each of said plurality of axial sections having a weight no greater than a designated maximum weight, and wherein, the designated maximum weight is equal to or less than a weight permitted for rail transport.
4. The tower according to any preceding Clause, wherein the designated maximum weight is equal to or less than about 64,000 kg.
5. The tower according to any preceding Clause, wherein each of said plurality of axial sections have a length no greater than a designated maximum length, and wherein, the designated maximum length is equal to or less than a length permitted for rail transport.
6. The tower according to any preceding Clause, wherein the designated maximum length is equal to or less than about 27 meters.
7. The tower according to any preceding Clause, wherein the tower is a wind turbine tower.
8. The tower according to any preceding Clause, wherein the non-circular cross-section has a shape chosen from at least one of the following group:
   polygonal, polygonal with rounded corners, triangular, rectangular, rectangular with rounded corners, pentagonal, pentagonal with rounded corners, hexagonal, hexagonal with rounded corners, heptagonal, heptagonal with rounded corners, octogonal, octogonal with rounded corners, nonagonal, nonagonal with rounded corners, decagonal, decagonal with rounded corners, hendecagonal, hendecagonal with rounded corners, dodecagon, dodecagon with rounded corners.
9. A wind turbine tower comprising:
   at least one lower section having a non-circular cross-section;
   at least one upper section having a substantially circular cross-section;
   wherein a cross-sectional profile of said tower transitions from the non-circular cross-section in the at least one lower section to the substantially circular cross-section in the at least one upper section.
10. The wind turbine tower according to any preceding Clause, wherein the cross-sectional profile transitions from non-circular to substantially circular within said at least one lower section.
11. The wind turbine tower according to any preceding Clause, wherein the cross-sectional profile transitions from non-circular to substantially circular within said at least one upper section.
12. The wind turbine tower according to any preceding Clause, wherein the cross-sectional profile transitions from non-circular to substantially circular between said at least one lower section and said at least one upper section.
13. The wind turbine tower according to any preceding Clause, wherein the non-circular cross-section has a shape chosen from at least one of the following group:
   polygonal, polygonal with rounded corners, triangular, rectangular, rectangular with rounded corners, pentagonal, pentagonal with rounded corners, hexagonal, hexagonal with rounded corners, heptagonal, heptagonal with rounded corners, octogonal, octogonal with rounded corners, nonagonal, nonagonal with rounded corners, decagonal, decagonal with rounded corners, hendecagonal, hendecagonal with rounded corners, dodecagon, dodecagon with rounded corners.
14. The wind turbine tower according to any preceding Clause, said at least one lower section having a diameter, length and weight equal to or less than a diameter, length and weight permitted for rail transport.
15. A wind turbine comprising:
   at least one lower tower section having a non-circular cross-section in at least a portion thereof;
   at least one upper tower section having a substantially circular cross-section in at least a portion thereof;
      wherein a cross-sectional profile of a tower of said wind turbine transitions from the non-circular cross-section in the at least one lower tower section to the substantially circular cross-section in the at least one upper tower section.
16. The wind turbine according to any preceding Clause, wherein the cross-sectional profile transitions from non-circular to substantially circular within said at least one lower tower section.
17. The wind turbine according to any preceding Clause, wherein the cross-sectional profile transitions from non-circular to substantially circular within said at least one upper tower section.
18. The wind turbine according to any preceding Clause, wherein the cross-sectional profile transitions from non-circular to substantially circular between said at least one lower tower section and said at least one upper tower section.
19. The wind turbine according to any preceding Clause, wherein the non-circular cross-section has a shape chosen from at least one of the following group:
   polygonal, polygonal with rounded corners, triangular, rectangular, rectangular with rounded corners, pentagonal, pentagonal with rounded corners, hexagonal, hexagonal with rounded corners, heptagonal, heptagonal with rounded corners, octogonal, octogonal with rounded corners, nonagonal, nonagonal with rounded corners, decagonal, decagonal with rounded corners, hendecagonal, hendecagonal with rounded corners, dodecagon, dodecagon with rounded corners.
20. The wind turbine tower according to any preceding Clause, said at least one lower section having a diameter, length and weight equal to or less than a diameter, length and weight permitted for rail transport.

## Claims

1. A tower (102) having a plurality of axial sections, said tower comprising:
at least one lower axial section (400,600) having a non-circular cross-section in at least a portion thereof, said at least one lower axial section located near a bottom of said tower;
at least one upper axial section (133) having a substantially circular cross-section in at least a portion thereof, said at least one upper axial section located near a top of said tower;
wherein the tower has a cross-sectional profile that transitions from said non-circular cross-section to said substantially circular cross-section, and an outer diameter of said tower less than a designated maximum diameter.

2. The tower (102) according to Claim 1, the designated maximum diameter being a maximum diameter permitted for rail transport, and wherein the designated maximum diameter is equal to or less than about 4 meters.

3. The tower (102) according to any preceding Claim, each of said plurality of axial sections having a weight no greater than a designated maximum weight, and wherein, the designated maximum weight is equal to or less than a weight permitted for rail transport.

4. The tower (102) according to Claim 3, wherein the designated maximum weight is equal to or less than about 64,000 kg.

5. The tower (102) according to any preceding Claim, wherein each of said plurality of axial sections have a length no greater than a designated maximum length, and wherein, the designated maximum length is equal to or less than a length permitted for rail transport.

6. The tower (102) according to any preceding Claim, wherein the designated maximum length is equal to or less than about 27 meters.

7. The tower (102) according to any preceding Claim, wherein the tower is a wind turbine tower.

8. The tower (102) according to any preceding Claim, wherein the non-circular cross-section has a shape chosen from at least one of the following group:
polygonal, polygonal with rounded corners, triangular, rectangular, rectangular with rounded corners, pentagonal, pentagonal with rounded corners, hexagonal, hexagonal with rounded corners, heptagonal, heptagonal with rounded corners, octogonal, octogonal with rounded corners, nonagonal, nonagonal with rounded corners, decagonal, decagonal with rounded corners, hendecagonal, hendecagonal with rounded corners, dodecagon, dodecagon with rounded corners.

9. A wind turbine (100) comprising:
at least one lower tower section (400, 600) having a non-circular cross-section in at least a portion thereof;
at least one upper tower section (133) having a substantially circular cross-section in at least a portion thereof;
wherein a cross-sectional profile of a tower (102) of said wind turbine transitions from the non-circular cross-section in the at least one lower tower section (400, 600) to the substantially circular cross-section in the at least one upper tower section (133).

10. The wind turbine according to Claim 9, said at least one lower section (400, 600) having a diameter, length and weight equal to or less than a diameter, length and weight permitted for rail transport and wherein the non-circular cross-section has a shape chosen from at least one of the following group:
polygonal, polygonal with rounded corners, triangular, rectangular, rectangular with rounded corners, pentagonal, pentagonal with rounded corners, hexagonal, hexagonal with rounded corners, heptagonal, heptagonal with rounded corners, octogonal, octogonal with rounded corners, nonagonal, nonagonal with rounded corners, decagonal, decagonal with rounded corners, hendecagonal, hendecagonal with rounded corners, dodecagon, dodecagon with rounded corners.
